# EUROPEAN PATENT APPLICATION

(11) **EP 4 783 044 A1**
(43) Date of publication of application: **29.07.2026**
(21) Application number: 26154735.0
(22) Date of filing: 28.01.2026
(51) Int. Cl.: G06F 21/55, H04L 9/40

(54) **DETERMINING COMMON EXPRESSION OF STRINGS FOR COMPUTER SYSTEM ALERTS**

(30) Priority: 28.01.2025 US 202519039476
(71) Applicant: Cylance Inc., Plano, TX 75024 (US)
(72) Inventor: GRAVES, Laura Micah, Waterloo, ON, N2K 0A7 (CA); LOMBARDI, Robert Joseph, Waterloo, ON, N2K 0A7 (CA)
(74) Representative: MERH-IP Matias Erny Reichl Hoffmann Patentanwälte PartG mbB

(57) **Abstract**

Systems, methods, and software can be used to determine common expressions of strings. In some aspects, a method includes: obtaining a plurality of strings; determining a plurality of tokens of at least one string of the plurality of strings; and determining at least one common expression of the plurality of strings based on the plurality of tokens of the at least one string of the plurality of strings.

## Description

### TECHNICAL FIELD

The present disclosure relates to determining common expression of strings for computer system alerts.

### BACKGROUND

In some cases, a computer security system uses alerts to identify activities in a monitored computer system or network, that may pose security risks. Different alerts may be generated when different activities are performed, e.g., accessing a particular resource, receiving or transmitting content that includes particular components, executing software code that includes specific routines or instructions. The computer security system can analyze these alerts to determine whether the monitored computer system or network may be under attack.

### DESCRIPTION OF DRAWINGS

FIG. 1 is a schematic diagram showing an example system that determining common expression for strings, according to an implementation.
FIG. 2 is a flowchart showing an example method for determining common expression of strings, according to an implementation.
FIG. 3 illustrates a high-level architecture block diagram of a computer according to an implementation.

Like reference numbers and designations in the various drawings indicate like elements.

### DETAILED DESCRIPTION

In some cases, the amount of the computer alerts may be large because the system may be configured to be cautionary and lean towards generating more alerts to be safe. These large amount of computer alerts needs to be processed to identify the type and risk levels. In some cases, the computer system alerts can be represented in strings. It is useful for a system administrator to be able to detect which parts of the security alerts are happening over a large part of the set of alerts, and which parts are infrequent or random enough to be considered random noise. This can help the administrator to determine that, for example, a piece of malware installs to a randomly generated folder each time it runs, but always runs with one of two command arguments.

In some cases, an automatic system can be used to generate one or more common expressions of the strings representing the security alerts. The software service platform can identify whether a new incoming alert matches one of these common expressions, as well as both the common part and random part of the matched common expression. This can enable the software service platform to quickly identify the security risk category of the new alert and the corresponding actions for the new alert. This approach also can be used by the software service platform and the administrator to collect statistics of the alerts and identify vulnerabilities for the system. This would reduce the number of alerts for further analysis and improve the speed and accuracy when identifying the security risks. In some cases, the common expression may also be referred to as canonical expression.

In some cases, a clustering operation can be performed on the strings that represent the pattern of the alerts and improves the effectiveness of the common expression generation by using the strings in the same cluster to generate the common expression. In some cases, a string distance calculation algorithm can be used to determine the string distance that represents the semantically-similarity between various parts in the strings. This string distance can be used in the clustering algorithm to generate strings of different clusters.

In general, a clustering algorithm can be used to group a set of data points into different clusters. Each cluster represents a group of data points that are relatively close to each other. The clustering algorithm takes input of the distances between these data points and groups the data points based on these distances, as well as some thresholds. Example of thresholds can include maximum distance within a cluster, minimum distance between neighbors, etc. These thresholds can be configured or training by using machine learning algorithms. Example of the clustering algorithm can include density-based spatial clustering of applications with noise (DBSCAN), K-means clustering algorithm, Gaussian Mixture Model algorithm, Balance Iterative Reducing and Clustering using Hierarchies (BIRCH) algorithm, Affinity Propagation clustering algorithm, Mean-Shift clustering algorithm, Ordering Points to Identify the Clustering Structure (OPTICS) algorithm, Agglomerative Hierarchy clustering algorithm, Divisive Hierarchical clustering algorithm, Mini-Batch K-means algorithm, and Spectral Clustering algorithm.

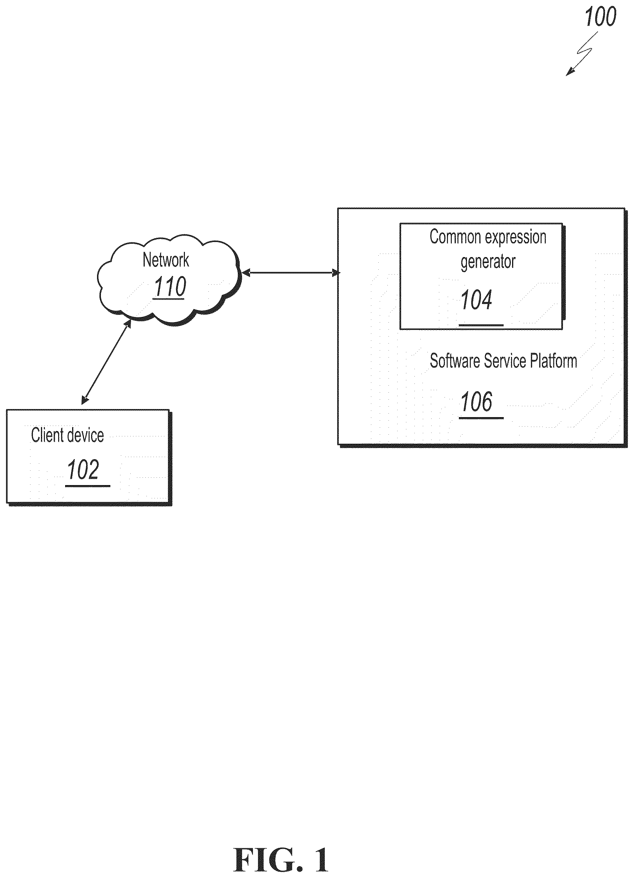

In some cases, a plurality of strings is obtained. The plurality of strings can be obtained from the same cluster of strings generated by a clustering operation. For each string of the plurality of strings, a plurality of tokens of the string are generated. At least one common expression of the plurality of strings is generated based on the plurality of tokens of the plurality of strings. In some cases, the common expressions are used to compare with a new alert. FIGS. 1-3 and associated descriptions provide additional details of these implementations.

FIG. 1 is a schematic diagram showing an example system 100 that determining common expression for strings, according to an implementation. At a high level, the example system 100 includes a software service platform 106 that is communicatively coupled with a client device 102 over a network 110.

The client device 102 represents an electronic device that provides the strings to be analyzed for common expression generation, matching, or any combination thereof. In some cases, the client device 102 can send the strings to the software service platform 106 for common expression generation or new alert comparison. In some implementations, the strings can represent computer system alerts. In these cases, the client device 102 can include one or more software that monitors the operation of the client device 102 or a computer network that is connected with the client device 102. The client device 102 can receive computer system alerts when triggering events occur. These triggering events can be configured by a user, an administrator, software algorithms, or any combinations thereof. The client device 102 can process the alert to generate the strings that represent the information of the alert, including e.g., the file path of the code, the command line that is issued by the code to trigger the alert, the timestamp of the alert and etc. Alternatively or in combination, the client device 102 can send the information of the alert to the software service platform 106 for the software service platform 106 to generate the strings for analysis. The client device 102 can be configured to send the strings or information of the alerts periodically or based on configured threshold or event trigger. In some cases, the software service platform 106 can send the output of the clustering analysis to the client device 102.

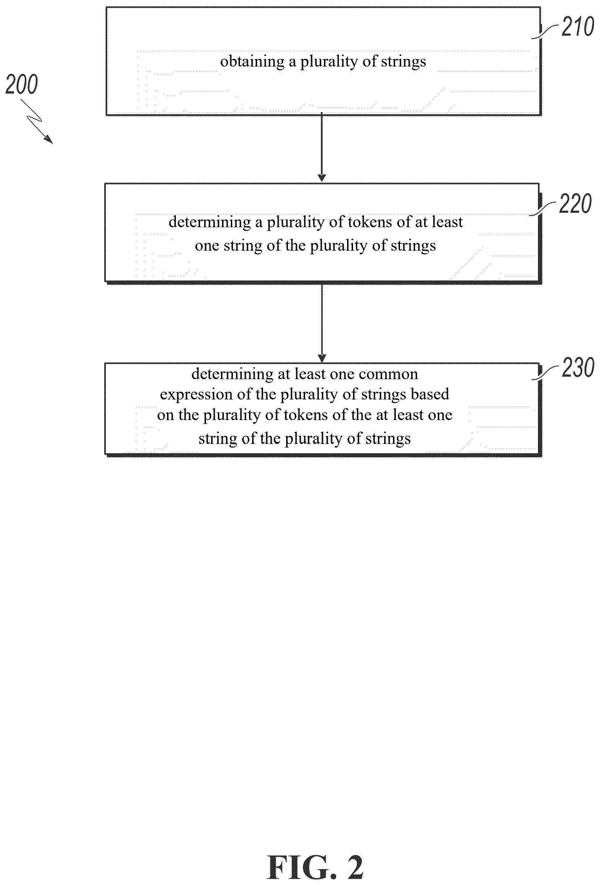

The software service platform 106 represents an application, a set of applications, software, software modules, hardware, or any combination thereof that determines common expression for strings. The software service platform 106 can be an application server, a service provider, or any other network entity. The software service platform 106 can be implemented using one or more computers, computer servers, or a cloud-computing platform. The software service platform 106 includes a common expression generator 104. The common expression generator 104 represents an application, a set of applications, software, software modules, hardware, or any combination thereof that receives strings and generates one or more common expressions. In some cases, the common expression generation can be performed periodically or based on certain configured thresholds or event triggers. FIGS. 2-3 and associated descriptions provide additional details of these implementations.

Turning to a general description, the client device 102 may include, without limitation, any of the following: endpoint, computing device, mobile device, mobile electronic device, user device, mobile station, subscriber station, portable electronic device, mobile communications device, wireless modem, wireless terminal, or another electronic device. Examples of an endpoint may include a mobile device, IoT (Internet of Things) device, EoT (Enterprise of Things) device, cellular phone, personal data assistant (PDA), smart phone, laptop, tablet, personal computer (PC), pager, portable computer, portable gaming device, wearable electronic device, health/medical/fitness device, camera, vehicle, or other mobile communications devices having components for communicating voice or data via a wireless communication network. A vehicle can include a motor vehicle (e.g., automobile, car, truck, bus, motorcycle, etc.), aircraft (e.g., airplane, unmanned aerial vehicle, unmanned aircraft system, drone, helicopter, etc.), spacecraft (e.g., spaceplane, space shuttle, space capsule, space station, satellite, etc.), watercraft (e.g., ship, boat, hovercraft, submarine, etc.), railed vehicle (e.g., train, tram, etc.), and other types of vehicles including any combinations of any of the foregoing, whether currently existing or after arising. The wireless communication network may include a wireless link over at least one of a licensed spectrum and an unlicensed spectrum. The term "mobile device" can also refer to any hardware or software component that can terminate a communication session for a user. In addition, the terms "user equipment," "UE," "user equipment device," "user agent," "UA," "user device," and "mobile device" can be used interchangeably herein.

The example system 100 includes the network 110. The network 110 represents an application, set of applications, software, software modules, hardware, or a combination thereof, that can be configured to transmit data messages between the entities in the example system 100. The network 110 can include a wireless network, a wireline network, the Internet, or a combination thereof. For example, the network 110 can include one or a plurality of radio access networks (RANs), core networks (CNs), and the Internet. The RANs may comprise one or more radio access technologies. In some implementations, the radio access technologies may be Global System for Mobile communication (GSM), Interim Standard 95 (IS-95), Universal Mobile Telecommunications System (UMTS), CDMA2000 (Code Division Multiple Access), Evolved Universal Mobile Telecommunications System (E-UMTS), Long Term Evaluation (LTE), LTE-Advanced, the fifth generation (5G), the sixth generation (6G), or any other radio access technologies. In some instances, the core networks may be evolved packet cores (EPCs).

While elements of FIG. 1 are shown as including various component parts, portions, or modules that implement the various features and functionality, nevertheless, these elements may instead include a number of sub-modules, third-party services, components, libraries, and such as appropriate. Furthermore, the features and functionality of various components can be combined into fewer components, as appropriate.

FIG. 2 is a flowchart showing an example method 200 for determining common expression of strings, according to an implementation. The example method 200 can be implemented by a software service platform, e.g., the software service platform 106 shown in FIG. 1. The example method 200 shown in FIG. 2 can be implemented using additional, fewer, or different operations, which can be performed in the order shown or in a different order.

At 210, a plurality of strings are obtained. In one example, each string element may represent a computer system alert. The computer system alert may include one or more indicators of the computer system alert. For example, a computer system may be configured to generate a computer system alert when a triggering event occurs. The triggering event may be an execution of a particular executable file on the computer system. The generated computer system alert may include one or more indicators that represent respective aspect of the triggering event. These indicators can include, e.g., a file path indicator that represents the file location of the executable file, a command indicator that represents the execution command of the executable file that triggers the alert, a timestamp of the alert.

Followings are example strings that represent computer system alerts:
c:/U sers/J oseph/Documents/temp-1236022/installer.exe--command=callhomen ts=20241101033539;
c:/Users/Sean/Documents/temp-8707109/installer.exe--command=namp-ts=20241101203554;
c:/Users/Andrew/Documents/temp-4092142/installer.exe--command=callhome-ts=20241101082329;

For illustration purpose, the above example includes only three strings. The number of the plurality of strings used to generate a common expression can vary.

As shown in the above examples, each string can include an indicator of a pathname (e.g., c:/Users/...), a command (e.g., callhome or namp), and a timestamp (ts) (e.g., 20241101033539).

In some cases, the string may include additional indicator, e.g., an executable code indicator. An executable code indicator can be generated based on the executable file itself. In one example, the executable code indicator can be a hash output of the binary code of the executable file. In this example, a hashing function can be performed on the binary code of the executable file to generate a hashing output. The hashing output can be the executable code indicator. The executable code indicator thus provides a fingerprint of the executable code that triggers the alert. In some cases, a cryptographical hashing algorithm can be used as the hashing function. Examples of the cryptographical hashing algorithm include Secure Hash Algorithm 256-bit (SHA-256). Alternatively, or additionally, a non-cryptographical hashing algorithm can be used as the hashing function. Examples of the non-cryptographical hashing algorithm include VHASH. In a cryptographical hashing algorithm, e.g., SHA-256, a small variation in the input may result in a completely different hash output. On the other hand, for a non-cryptographical hashing algorithm, a small variation in the input may result a small variation of the hash output. Alternatively, or additionally, a non-cryptographical hashing algorithm can be a locality-sensitive hashing algorithm so that inputs that are close enough (according to a distance) will give identical hashes. For example, given a first executable file which is a malware, and a second executable file which is a polymorphic version of the first executable file with few modifications, then the use of locality-sensitive hashing algorithm will give close or comparable results. It enables to reduce the number of alerts by gathering similar threats.

Following is an example executable code indicator: F571B3FEAEBC562D846AAEAB907243AB1F8805610543B21C8B9844A626C1841.

In some cases, the types of indicators that form the strings representing the alert can be configured. For example, the computer system can record a number of attributes of the triggering event including e.g., triggering time, execution duration, etc. Some or all of these attributes can be recorded and included in the strings in addition to or as alternative to the file path indicator, command indicator, or time stamp indicator discussed previously. Additionally or alternatively, some or all of these attributes can be concatenated or otherwise combined or processed before being included in the strings.

In some cases, a clustering operation can be performed on a set of strings to obtain the plurality of strings. For example, each of the set of strings represents a computer system alert. The clustering operation can be used to group these strings into different clusters. Each cluster has a plurality of strings that has semantical similarity with each other. The strings in each cluster are then used as the plurality of strings to generate common expressions. Clustering the strings prior to the generation of the common expressions can provide one or more advantages. For example, the strings in the same cluster are more likely to have similar format and similar information, and therefore may improve the quality of the common expressions generated based on the strings in the same cluster.

At step 220, a plurality of tokens of at least one string of the plurality of strings is determined. In some cases, for each string of the plurality of strings, a plurality of tokens of the string are determined. For example, each of one or more strings in the plurality of strings can be separated into a set of tokens. In some implementations, the separation can be performed by using separators. Each separator can be one or more characters that are used to separate the string into tokens. A token represents a substring without the separators. The separators can be preconfigured. In one example, the separators can include the following set of characters: {"/", "\", "=", ".", "_"}, where "_" represent empty space. In some cases, other separators can also be included, e.g., "|". In some cases, different separators can be configured for different clusters of strings. For example, by using {"/", "\", "=", ".", "_"}as the separators, the example strings discussed previously can include the following tokens:
c: Users Joseph Documents temp-1236022 installer exe --command callhome --ts 20241101033539;
c: Users Sean Documents temp-8707109 installer exe --command namp --ts 20241101203554;
c: Users Andrew Documents temp-4092142 installer exe --command callhome --ts 20241101082329

The tokens can be different if different separators are configured, e.g., if "-" is also configured, then the token "temp-1236022" will be separated into 2 different tokens, i.e., "temp" and "1236022."

Each token can be associated with a positional parameter. The positional parameter can be assigned based on the position of the token in the string. For example, if a token is the first token in the string, the positional parameter of the token can be assigned as "0". If a token is the second token in the string, the positional parameter of the token can be assigned as "1", and so on. Following are the positional parameters as shown in parentheses followed by the respective tokens in an example string.

c: (0) Users (1) Joseph (2) Documents (3) temp-1236022 (4) installer (5) exe (6)-command (7) callhome (8) --ts (9) 20241101033539 (10);
Other algorithms for assigning the positional parameter can also be used, e.g., starting with the number "1", skipping numbers, sequentially from last position instead of the first position, and etc. In some cases, an alignment operation can be performed to align strings with different number of tokens. For example, some strings may have a larger or a smaller number of tokens in the file path indicator of their strings than other strings. In that case, empty tokens can be added to the string so that the positional parameter for the command indicators are the same for all the strings in the plurality of strings that are used to generate the common expression. For example, if one of the strings has the following tokens for position parameter: C: Joseph Documents temp-1236022 installer exe, but do not have the token "Users" like other strings. An empty token can be added to position parameter 1 of the string, so that the rest of the tokens are aligned up with other strings. In some cases, the common expression generator 104 can search all the strings and add empty tokens to align the remaining tokens.

At 230, at least one common expression of the plurality of strings is determined based on the plurality of tokens of the at least one string of the plurality of strings. In some cases, the at least one string can include all the strings of the plurality of strings. In some implementations, for each positional parameter, tokens that are associated with the same positional parameter are compared. In one example, for each positional parameter, a string element for that positional parameter is determined based on the comparison of tokens that are associated with that positional parameter. For example, for the example strings discussed previously, following are the tokens associated with position parameter 0 in each string: c:, c:, c:. In this case, all tokens for the position parameter 0 are the same, they are "c:". As a result, the string element position parameter 0 can be set as the token "c:".

In some cases, multiple tokens may be found for the same position parameter. For example, for the example strings discussed previously, both "callhome" and "nmap" are tokens that are associated with position parameter 8. In these cases, the frequency of these tokens can be used to determine the string element for that position parameter. The frequency can be obtained as a ratio between the number of times the token appears for that position parameter over the total number of tokens for that position parameter. For example, "callhome" appears 2 out of 3 times, thus the frequency of "callhome" is 2/3 = 0.6667; while the frequency of "nmap" = 1/3 = 0.3333.

In some cases, the token with the highest frequency can be assigned as the string element for the position parameter. In the above-discussed example, "callhome" can be set as the string element for position parameter 8. Alternatively, or additionally, a threshold can be used to determine how to set the string element. If the frequency of the token is equal to or higher than the frequency, that token can be set as a string element for that position parameter. For example, if the threshold is set at 0.5, then "callhome" can be set as the string element for position parameter 8 because its frequency is higher than the threshold, while "nmap" is not the string element for position parameter 8 because its frequency is lower than the threshold. While "equal to or higher than" is used as an example, other conditions, e.g., "higher than," can be used instead or additionally.

In some cases, no token has a frequency that is equal to or higher than the threshold. In one example, for the example strings discussed previously, for position parameter 2, each token appears once. If the threshold is set to 0.5, then no token has a frequency that is higher than the threshold. In these cases, a wild character can be used to represent the string element for position parameter 2. The wild character can be set to "*" or set to any other single or multiple characters that are configured to represent a generic expression. The form of the wild character can be set by a user, an administrator, a manufacturer, or operator of the software service platform 106, or any combination thereof.

In some cases, more than one tokens may have frequencies that are equal to or higher than the threshold. For example, if the frequency is set to 0.2, then both "callhome" and "nmap" met the condition to be the string element for position parameter 8. In these cases, there can be multiple string elements for that position parameter.

The threshold can be set to be the same for all positional parameters. Alternatively, different thresholds can be set for one or more positional parameters. In some cases, the threshold can be set based on input from a user, an administrator, a manufacturer, or operator of the software service platform 106, or any combination thereof. Alternatively or additionally, the threshold for a positional parameter can be set based on properties of the positional parameter and tokens of that positional parameter, including e.g., the number of total tokens for that positional parameter, the precision criteria for that positional parameter, the number of different tokens obtained for that positional parameter, and etc. These properties can be received through user input, pre-configured by an administrator, properties operator, or a manufacturer, determined based on the tokens in the plurality of strings, or any combinations thereof.

The common expression can be determined by combining the determined string elements for each positional parameters discussed previously. In one example, the common expression can be "c: Users * Documents * installer exe --command callhome --ts *", where "*" represent the wild character. In some cases, the separators that were removed from the string when obtaining the tokens can be saved during the separation step, and then added back to the common expression. For example, the common expression can be "c:/Users/*/Documents/*/installer.exe - command=callhome -ts=*".

In some cases, as discussed previously, multiple string elements can be found for the same positional parameter. In that case, multiple common expressions are generated. For example, if both "callhome" and "nmap" are the string elements for positional parameter 8, then two common expressions can be generated. They are: "c:/Users/*/Documents/*/installer.exe - command=callhome -ts=*", and "c:/Users/*/Documents/*/installer.exe -command=nmap-ts=*". In some cases, if there are multiple positional parameters have multiple string elements, then each combination of these multiple string elements and the multiple positional parameters can be represented. For example, if there are two string elements for positional parameter 8 and two string elements for positional parameter 2, then there can be four common expressions, each includes a different combination of one of the string elements for positional parameter 8 and one of the string elements for positional parameter 2.

The number of wild characters represent the number of non-specific tokens found in the common expression. In some cases, if there are too many wild characters, it may indicate that the common expression fails to capture the commonality of the plurality of strings. In some cases, a second threshold can be used to determine whether such a failure occurs. The second threshold can be a number of the wild characters in the common expression, or the ratio of number of the wild characters over the total number of positional parameters. The second threshold can be set by a user, an administrator, a manufacturer, or operator of the software service platform 106, or any combination thereof. Alternatively, or additionally, the second threshold can be set based on autonomously based on security criteria, e.g., different security levels may correspond to different second threshold.

In some cases, the number of wild characters in the common expression is compared with the second threshold. If number of wild characters exceed the second threshold, then an indicator may be generated to indicate that the generation of the common expression has failed. In some cases, the method 200 may re-start from step 210. In some cases, another clustering operation may be performed to re-generate the plurality of strings in the same cluster that are used to generate the common expression, where different parameters of the clustering operation can be used. Alternatively, or additionally, more strings may be collected to add to plurality of strings that are used to generate the common expression. Moreover, an alignment operation or different alignment operations can be triggered in step 220 to align the tokens. Furthermore, different thresholds can be set or adjusted for one or more positional parameters, e.g., increased or reduced, to be used in step 230. Any combinations of these adjustment can be performed to generate another common expression. In some cases, multiple iterations of method 200 can be performed, in each iteration, the second threshold can be used to determine whether the common expression is successfully generated, and the iteration can stop.

In some cases, the generated common expression can be outputted at the user interface of the software service platform that performs the analysis. In some cases, other information of the generation process, e.g., number of strings, number of positional parameters, number of wild characters, thresholds for each positional parameter, or any combinations thereof can also be outputted. In some cases, if the common expression generation fails according to the second threshold as discussed previously, the failure indicator, the common expression that does not meet the second threshold, the second threshold, or any combinations thereof can also be outputted. Alternatively or additionally, the generation result, common expression, and the other information of the generation process can be sent to a different device for outputting.

In some cases, the common expression can be used to identify incoming alerts. For example, each common expression can indicate a category of security risk. For example, the common expression that has the token "callhome" may indicate a security risk associated with the "callhome" routine. The common expression that has the token of a particular username may indicate a security risk associated with that particular user. The software service platform can save the common expressions in a database. When a new alert is received, the software service platform can determine whether the new alert matches any of the common expressions. For example, whether the new alert has the same tokens for each non-wild character in one of the common expressions. If so, the software service platform can identify that the incoming alert belong to the security risk category corresponds to the common expression. The software service platform can output the indication of the security risk category, the common expression, other information associated with the security risk category (including e.g., the risk level, the responsive actions, and etc.), or any combinations thereof. Alternatively, or additionally, the indication of the security risk category, the common expression, and other information can be sent to a different device for outputting.

In some cases, the common expressions generated by the software service platform can be sent to another device, e.g., a client device. And the another device can use the common expressions to identify the new alert that is received at the another device.

In some cases, if the new alert does not match any of the common expressions, the new alert may be dropped. Alternatively, or additionally, the new alert may be outputted or sent to another device, indicating that an unmatched alert is received.

While the descriptions above use strings that represent computer system alerts as an example, the method 200 can be used to generate common expressions of strings representing other information. For example, the method 200 can be used to generate common expressions of strings that represent internet addresses, network commands, command line arguments, process/file paths, process/file names, arguments of API calls, or other Operating System (OS) specific system information.

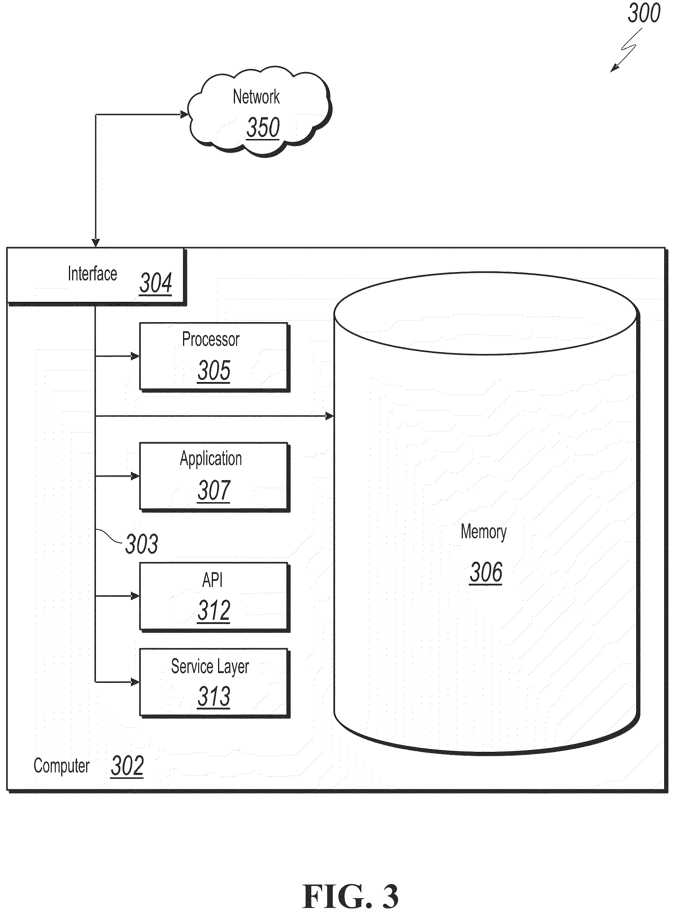

FIG. 3 is a high-level architecture block diagram showing a computer 302 coupled with a network 350, according to an implementation. The computer 302 can also be used to implement the operations discussed in FIGS. 1-2. The described illustration is only one possible implementation of the described subject matter and is not intended to limit the disclosure to the single described implementation. Those of ordinary skill in the art will appreciate the fact that the described components can be connected, combined, or used in alternative ways, consistent with this disclosure.

The network 350 facilitates communications between the computer 302 and other devices. In some cases, a user, e.g., an administrator, can access the computer 302 from a remote network. In these or other cases, the network 350 can be a wireless or a wireline network. In some cases, a user can access the computer 302 locally. In these or other cases, the network 350 can also be a memory pipe, a hardware connection, or any internal or external communication paths between the components.

The computer 302 includes a computing system configured to perform the algorithm described in this disclosure. For example, the computer 302 can be used to implement the software service platform 106 or the client device 102 shown in FIG. 1. In some cases, the algorithm can be implemented in an executable computing code, e.g., C/C++ executable code. Alternatively, or in combination, the algorithm can be implemented in an application program, e.g., EXCEL. In some cases, the computer 302 can include a standalone LINUX system that runs batch applications. In some cases, the computer 302 can include mobile or personal computers that run the application program.

The computer 302 may include an input device, such as a keypad, keyboard, touch screen, microphone, speech recognition device, or another device that can accept user information, and/or an output device that conveys information associated with the operation of the computer 302, including digital data, visual and/or audio information, or a GUI.

The computer 302 can serve as a client, network component, a server, a database or other persistency, or the like. In some implementations, one or more components of the computer 302 may be configured to operate within a cloud-computing-based environment.

At a high level, the computer 302 is an electronic computing device operable to receive, transmit, process, store, or manage data and information. According to some implementations, the computer 302 may also include or be communicably coupled with an application server, e-mail server, web server, caching server, streaming data server, business intelligence (BI) server, and/or other server.

The computer 302 can receive requests over network 350 from a client application (e.g., executing on a user device) and respond to the received requests by processing said requests in an appropriate software application. In addition, requests may also be sent to the computer 302 from internal users (e.g., from a command console or by another appropriate access method), external or third parties, other automated applications, as well as any other appropriate entities, individuals, systems, or computers.

Each of the components of the computer 302 can communicate using a system bus 303. In some implementations, any and/or all the components of the computer 302, both hardware and/or software, may interface with each other and/or the interface 304 over the system bus 303, using an application programming interface (API) 312 and/or a service layer 313. The API 312 may include specifications for routines, data structures, and object classes. The API 312 may be either computer language-independent or -dependent and refer to a complete interface, a single function, or even a set of APIs. The service layer 313 provides software services to the computer 302. The functionality of the computer 302 may be accessible for all service consumers using this service layer. Software services, such as those provided by the service layer 313, provide reusable, defined business functionalities through a defined interface. For example, the interface may be software written in JAVA, C++, or other suitable language providing data in Extensible Markup Language (XML) format or another suitable format. While illustrated as an integrated component of the computer 302, alternative implementations may illustrate the API 312 and/or the service layer 313 as stand-alone components in relation to other components of the computer 302. Moreover, any or all parts of the API 312 and/or the service layer 313 may be implemented as child or sub-modules of another software module or hardware module, without departing from the scope of this disclosure.

The computer 302 includes an interface 304. Although illustrated as a single interface 304 in FIG. 3, two or more interfaces 304 may be used according to particular needs, configurations, or particular implementations of the computer 302. The interface 304 is used by the computer 302 for communicating with other systems in a distributed environment connected to the network 350 - (whether illustrated or not). Generally, the interface 304 comprises logic encoded in software and/or hardware in a suitable combination and operable to communicate with the network 350. More specifically, the interface 304 may comprise software supporting one or more communication protocols associated with communications such that the network 350 or the interface's hardware are operable to communicate physical signals.

The computer 302 includes a processor 305. Although illustrated as a single processor 305 in FIG. 3, two or more processors may be used according to particular needs, configurations, or particular implementations of the computer 302. Generally, the processor 305 executes instructions and manipulates data to perform the operations of the computer 302. In some cases, the processor 305 can include a data processing apparatus.

The computer 302 also includes a memory 306 that holds data for the computer 302. Although illustrated as a single memory 306 in FIG. 3, two or more memories may be used according to particular needs, configurations, or particular implementations of the computer 302. While memory 306 is illustrated as an integral component of the computer 302, in alternative implementations, memory 306 can be external to the computer 302.

The application 307 comprises an algorithmic software engine providing functionality according to particular needs, configurations, or particular implementations of the computer 302. Although illustrated as a single application 307, the application 307 may be implemented as multiple applications 307 on the computer 302. In addition, although illustrated as integral to the computer 302, in alternative implementations, the application 307 can be external to the computer 302.

There may be any number of computers 302 associated with, or external to, the system 300 and communicating over network 350. Further, the terms "client," "user," and other appropriate terminology may be used interchangeably, as appropriate, without departing from the scope of this disclosure. Moreover, this disclosure contemplates that many users may use one computer 302, or that one user may use multiple computers 302.

Described implementations of the subject matter can include one or more features, alone or in combination.

For example, in a first implementation, a method, comprising: obtaining a plurality of strings; determining a plurality of tokens of at least one string of the plurality of strings; and determining at least one common expression of the plurality of strings based on the plurality of tokens of the at least one string of the plurality of strings.

The foregoing and other described implementations can each, optionally, include one or more of the following features:
A first feature, combinable with any of the following features, wherein at least one token of the plurality of tokens is associated with a positional parameter, and wherein the determining at least one common expression comprising: comparing tokens that are associated with the positional parameter; and determining a string element of the at least one common expression based on the comparing, wherein the string element corresponds to the positional parameter.

A second feature, combinable with any of the previous or following features, wherein the string element comprises a token associated with the positional parameter or a wild character.

A third feature, combinable with any of the previous or following features, wherein the string element is determined based on frequencies of tokens associated with the positional parameter and a threshold.

A fourth feature, combinable with any of the previous or following features, wherein at least two positional parameters are associated with different thresholds.

A fifth feature, combinable with any of the previous or following features, wherein at least two string elements are determined for a same positional parameter, and the at least one common expression comprises a first common expression that includes a first string element of the at least two string elements, and a second common expression that includes a second string element of the at least two string elements.

A sixth feature, combinable with any of the previous or following features, further including: performing a clustering operation on a set of strings; and wherein the plurality of strings belong to a same cluster based on the clustering operation.

A seventh feature, combinable with any of the previous features, wherein the determining the plurality of tokens of at least one string of the plurality of strings comprises: for each string of the plurality of strings, determining a plurality of tokens of the string.

In a second implementation, a computer-readable medium containing instructions which, when executed, cause an electronic device to perform operations comprising: obtaining a plurality of strings; determining a plurality of tokens of at least one string of the plurality of strings; and determining at least one common expression of the plurality of strings based on the plurality of tokens of the at least one string of the plurality of strings.

The foregoing and other described implementations can each, optionally, include one or more of the following features:
A first feature, combinable with any of the following features, wherein at least one token of the plurality of tokens is associated with a positional parameter, and wherein the determining at least one common expression comprising: comparing tokens that are associated with the positional parameter; and determining a string element of the at least one common expression based on the comparing, wherein the string element corresponds to the positional parameter.

A second feature, combinable with any of the previous or following features, wherein the string element comprises a token associated with the positional parameter or a wild character.

A third feature, combinable with any of the previous or following features, wherein the string element is determined based on frequencies of tokens associated with the positional parameter and a threshold.

A fourth feature, combinable with any of the previous or following features, wherein at least two positional parameters are associated with different thresholds.

A fifth feature, combinable with any of the previous or following features, wherein at least two string elements are determined for a same positional parameter, and the at least one common expression comprises a first common expression that includes a first string element of the at least two string elements, and a second common expression that includes a second string element of the at least two string elements.

A sixth feature, combinable with any of the previous or following features, the operations further include: performing a clustering operation on a set of strings; and wherein the plurality of strings belong to a same cluster based on the clustering operation.

A seventh feature, combinable with any of the previous features, wherein the determining the plurality of tokens of at least one string of the plurality of strings comprises: for each string of the plurality of strings, determining a plurality of tokens of the string.

In a third implementation, a computer-implemented system, comprising: obtaining a plurality of strings; determining a plurality of tokens of at least one string of the plurality of strings; and determining at least one common expression of the plurality of strings based on the plurality of tokens of the at least one string of the plurality of strings.

The foregoing and other described implementations can each, optionally, include one or more of the following features:
A first feature, combinable with any of the following features, wherein at least one token of the plurality of tokens is associated with a positional parameter, and wherein the determining at least one common expression comprising: comparing tokens that are associated with the positional parameter; and determining a string element of the at least one common expression based on the comparing, wherein the string element corresponds to the positional parameter.

A second feature, combinable with any of the previous or following features, wherein the string element comprises a token associated with the positional parameter or a wild character.

A third feature, combinable with any of the previous or following features, wherein the string element is determined based on frequencies of tokens associated with the positional parameter and a threshold.

A fourth feature, combinable with any of the previous or following features, wherein at least two positional parameters are associated with different thresholds.

A fifth feature, combinable with any of the previous or following features, wherein at least two string elements are determined for a same positional parameter, and the at least one common expression comprises a first common expression that includes a first string element of the at least two string elements, and a second common expression that includes a second string element of the at least two string elements.

A sixth feature, combinable with any of the previous or following features, the operations further include: performing a clustering operation on a set of strings; and wherein the plurality of strings belong to a same cluster based on the clustering operation.

A seventh feature, combinable with any of the previous features, wherein the determining the plurality of tokens of at least one string of the plurality of strings comprises: for each string of the plurality of strings, determining a plurality of tokens of the string.

Implementations of the subject matter and the functional operations described in this specification can be implemented in digital electronic circuitry, in tangibly embodied computer software or firmware, in computer hardware, including the structures disclosed in this specification and their structural equivalents, or in combinations of one or more of them. Software implementations of the described subject matter can be implemented as one or more computer programs, that is, one or more modules of computer program instructions encoded on a tangible, non transitory, computer-readable medium for execution by, or to control the operation of, a computer or computer-implemented system. Alternatively, or additionally, the program instructions can be encoded in/on an artificially generated propagated signal, for example, a machine-generated electrical, optical, or electromagnetic signal that is generated to encode information for transmission to a receiver apparatus for execution by a computer or computer-implemented system. The computer-storage medium can be a machine-readable storage device, a machine-readable storage substrate, a random or serial access memory device, or a combination of computer-storage mediums. Configuring one or more computers means that the one or more computers have installed hardware, firmware, or software (or combinations of hardware, firmware, and software) so that when the software is executed by the one or more computers, particular computing operations are performed. The computer storage medium is not, however, a propagated signal.

The term "real-time," "real time," "realtime," "real (fast) time (RFT)," "near(ly) real-time (NRT)," "quasi real-time," or similar terms (as understood by one of ordinary skill in the art), means that an action and a response are temporally proximate such that an individual perceives the action and the response occurring substantially simultaneously. For example, the time difference for a response to display (or for an initiation of a display) of data following the individual's action to access the data can be less than 1 millisecond (ms), less than 1 second (s), or less than 5 s. While the requested data need not be displayed (or initiated for display) instantaneously, it is displayed (or initiated for display) without any intentional delay, taking into account processing limitations of a described computing system and time required to, for example, gather, accurately measure, analyze, process, store, or transmit the data.

The terms "data processing apparatus," "computer," "computing device," or "electronic computer device" (or an equivalent term as understood by one of ordinary skill in the art) refer to data processing hardware and encompass all kinds of apparatuses, devices, and machines for processing data, including by way of example, a programmable processor, a computer, or multiple processors or computers. The computer can also be, or further include special-purpose logic circuitry, for example, a central processing unit (CPU), a field-programmable gate array (FPGA), or an application specific integrated circuit (ASIC). In some implementations, the computer or computer-implemented system or special-purpose logic circuitry (or a combination of the computer or computer-implemented system and special-purpose logic circuitry) can be hardware- or software-based (or a combination of both hardware- and software-based). The computer can optionally include code that creates an execution environment for computer programs, for example, code that constitutes processor firmware, a protocol stack, a database management system, an operating system, or a combination of execution environments. The present disclosure contemplates the use of a computer or computer-implemented system with an operating system, for example LINUX, UNIX, WINDOWS, MAC OS, ANDROID, or IOS, or a combination of operating systems.

A computer program, which can also be referred to or described as a program, software, a software application, a unit, a module, a software module, a script, code, or other component can be written in any form of programming language, including compiled or interpreted languages, or declarative or procedural languages, and it can be deployed in any form, including, for example, as a stand alone program, module, component, or subroutine, for use in a computing environment. A computer program can, but need not, correspond to a file in a file system. A program can be stored in a portion of a file that holds other programs or data, for example, one or more scripts stored in a markup language document, in a single file dedicated to the program in question, or in multiple coordinated files, for example, files that store one or more modules, sub programs, or portions of code. A computer program can be deployed to be executed on one computer or on multiple computers that are located at one site or distributed across multiple sites and interconnected by a communication network.

While portions of the programs illustrated in the various figures can be illustrated as individual components, such as units or modules, that implement described features and functionality using various objects, methods, or other processes, the programs can instead include a number of sub-units, sub-modules, third-party services, components, libraries, and other components, as appropriate. Conversely, the features and functionality of various components can be combined into single components, as appropriate. Thresholds used to make computational determinations can be statically, dynamically, or both statically and dynamically determined.

Described methods, processes, or logic flows represent one or more examples of functionality consistent with the present disclosure and are not intended to limit the disclosure to the described or illustrated implementations, but to be accorded the widest scope consistent with described principles and features. The described methods, processes, or logic flows can be performed by one or more programmable computers executing one or more computer programs to perform functions by operating on input data and generating output data. The methods, processes, or logic flows can also be performed by, and computers can also be implemented as, special-purpose logic circuitry, for example, a CPU, an FPGA, or an ASIC.

Computers for the execution of a computer program can be based on general or special-purpose microprocessors, both, or another type of CPU. Generally, a CPU will receive instructions and data from and write to a memory. The essential elements of a computer are a CPU, for performing or executing instructions, and one or more memory devices for storing instructions and data. Generally, a computer will also include, or be operatively coupled to, receive data from or transfer data to, or both, one or more mass storage devices for storing data, for example, magnetic, magneto optical disks, or optical disks. However, a computer need not have such devices. Moreover, a computer can be embedded in another device, for example, a mobile telephone, a personal digital assistant (PDA), a mobile audio or video player, a game console, a global positioning system (GPS) receiver, or a portable memory storage device, for example, a universal serial bus (USB) flash drive, to name just a few.

Non-transitory computer readable media for storing computer program instructions and data can include all forms of permanent/non-permanent or volatile/non volatile memory, media and memory devices, including by way of example semiconductor memory devices, for example, random access memory (RAM), read only memory (ROM), phase change memory (PRAM), static random access memory (SRAM), dynamic random access memory (DRAM), erasable programmable read-only memory (EPROM), electrically erasable programmable read-only memory (EEPROM), and flash memory devices; magnetic devices, for example, tape, cartridges, cassettes, internal/removable disks; magneto optical disks; and optical memory devices, for example, digital versatile/video disc (DVD), compact disc (CD) ROM, DVD+/-R, DVD-RAM, DVD-ROM, high-definition/density (HD)-DVD, and BLU-RAY/BLU-RAY DISC (BD), and other optical memory technologies. The memory can store various objects or data, including caches, classes, frameworks, applications, modules, backup data, jobs, web pages, web page templates, data structures, database tables, repositories storing dynamic information, or other appropriate information including any parameters, variables, algorithms, instructions, rules, constraints, or references. Additionally, the memory can include other appropriate data, such as logs, policies, security or access data, or reporting files. The processor and the memory can be supplemented by, or incorporated in, special-purpose logic circuitry.

To provide for interaction with a user, implementations of the subject matter described in this specification can be implemented on a computer having a display device, for example, a cathode ray tube (CRT), liquid crystal display (LCD), light emitting diode (LED), or plasma monitor, for displaying information to the user and a keyboard and a pointing device, for example, a mouse, trackball, or trackpad by which the user can provide input to the computer. Input can also be provided to the computer using a touchscreen, such as a tablet computer surface with pressure sensitivity or a multi-touch screen using capacitive or electric sensing. Other types of devices can be used to interact with the user. For example, feedback provided to the user can be any form of sensory feedback (such as, visual, auditory, tactile, or a combination of feedback types). Input from the user can be received in any form, including acoustic, speech, or tactile input. In addition, a computer can interact with the user by sending documents to and receiving documents from a client computing device that is used by the user (for example, by sending web pages to a web browser on a user's mobile computing device in response to requests received from the web browser).

The term "graphical user interface (GUI) can be used in the singular or the plural to describe one or more graphical user interfaces and each of the displays of a particular graphical user interface. Therefore, a GUI can represent any graphical user interface, including but not limited to, a web browser, a touch screen, or a command line interface (CLI) that processes information and efficiently presents the information results to the user. In general, a GUI can include a number of user interface (UI) elements, some or all associated with a web browser, such as interactive fields, pull-down lists, and buttons. These and other UI elements can be related to or represent the functions of the web browser.

Implementations of the subject matter described in this specification can be implemented in a computing system that includes a back end component, for example, as a data server, or that includes a middleware component, for example, an application server, or that includes a front-end component, for example, a client computer having a graphical user interface or a Web browser through which a user can interact with an implementation of the subject matter described in this specification, or any combination of one or more such back end, middleware, or front end components. The components of the system can be interconnected by any form or medium of wireline or wireless digital data communication (or a combination of data communication), for example, a communication network. Examples of communication networks include a local area network (LAN), a radio access network (RAN), a metropolitan area network (MAN), a wide area network (WAN), Worldwide Interoperability for Microwave Access (WIMAX), a wireless local area network (WLAN) using, for example, 802.11x or other protocols, all or a portion of the Internet, another communication network, or a combination of communication networks. The communication network can communicate with, for example, Internet Protocol (IP) packets, frame relay frames, Asynchronous Transfer Mode (ATM) cells, voice, video, data, or other information between network nodes.

The computing system can include clients and servers. A client and server are generally remote from each other and typically interact through a communication network. The relationship of client and server arises by virtue of computer programs running on the respective computers and having a client-server relationship to each other.

In some implementations, any or all of the components of the computing system, both hardware and/or software, may interface with each other and/or the interface using an API and/or a service layer. The API may include specifications for routines, data structures, and object classes. The API may be either computer language independent or dependent and refer to a complete interface, a single function, or even a set of APIs. The service layer provides software services to the computing system. The functionality of the various components of the computing system may be accessible for all service consumers via this service layer. Software services provide reusable, defined business functionalities through a defined interface. For example, the interface may be software written in JAVA, C++, or other suitable language providing data in XML format or other suitable formats. The API and/or service layer may be an integral and/or a stand-alone component in relation to other components of the computing system. Moreover, any or all parts of the service layer may be implemented as child or sub-modules of another software module, enterprise application, or hardware module without departing from the scope of this disclosure.

While this specification contains many specific implementation details, these should not be construed as limitations on the scope of any inventive concept or on the scope of what can be claimed, but rather as descriptions of features that can be specific to particular implementations of particular inventive concepts. Certain features that are described in this specification in the context of separate implementations can also be implemented, in combination, in a single implementation. Conversely, various features that are described in the context of a single implementation can also be implemented in multiple implementations, separately, or in any sub-combination. Moreover, although previously described features can be described as acting in certain combinations and even initially claimed as such, one or more features from a claimed combination can, in some cases, be excised from the combination, and the claimed combination can be directed to a sub-combination or variation of a sub-combination.

Particular implementations of the subject matter have been described. Other implementations, alterations, and permutations of the described implementations are within the scope of the following claims as will be apparent to those skilled in the art. While operations are depicted in the drawings or claims in a particular order, this should not be understood as requiring that such operations be performed in the particular order shown or in sequential order, or that all illustrated operations be performed (some operations can be considered optional), to achieve desirable results. In certain circumstances, multitasking or parallel processing (or a combination of multitasking and parallel processing) can be advantageous and performed as deemed appropriate.

The separation or integration of various system modules and components in the previously described implementations should not be understood as requiring such separation or integration in all implementations, and it should be understood that the described program components and systems can generally be integrated together in a single software product or packaged into multiple software products.

Accordingly, the previously described example implementations do not define or constrain the present disclosure. Other changes, substitutions, and alterations are also possible without departing from the scope of the present disclosure.

Furthermore, any claimed implementation is considered to be applicable to at least a computer-implemented method; a non-transitory, computer-readable medium storing computer-readable instructions to perform the computer-implemented method; and a computer system comprising a computer memory interoperably coupled with a hardware processor configured to perform the computer-implemented method or the instructions stored on the non-transitory, computer-readable medium.

## Claims

1. A method, comprising:
obtaining a plurality of strings;
determining a plurality of tokens of at least one string of the plurality of strings; and
determining at least one common expression of the plurality of strings based on the plurality of tokens of the at least one string of the plurality of strings.

2. The method of claim 1, wherein the determining the plurality of tokens of at least one string of the plurality of strings comprises: for each string of the plurality of strings, determining a plurality of tokens of the string.

3. The method of claim 1 or 2, wherein at least one token of the plurality of tokens is associated with a positional parameter, and wherein the determining at least one common expression comprising:
comparing tokens that are associated with the positional parameter; and
determining a string element of the at least one common expression based on the comparing, wherein the string element corresponds to the positional parameter.

4. The method of claim 3, wherein the string element comprises a token associated with the positional parameter or a wild character.

5. The method of claim 3, wherein the string element is determined based on frequencies of tokens associated with the positional parameter and a threshold.

6. The method of claim 5, wherein at least two positional parameters are associated with different thresholds.

7. The method of claim 3, wherein at least two string elements are determined for a same positional parameter, and the at least one common expression comprises a first common expression that includes a first string element of the at least two string elements, and a second common expression that includes a second string element of the at least two string elements.

8. The method of any one of claims 1 to 7, further comprising:
performing a clustering operation on a set of strings; and wherein the plurality of strings belong to a same cluster based on the clustering operation.

9. A computer-readable medium containing instructions which, when executed, cause an electronic device to perform the method claimed in any one of claims 1 to 8.

10. A computer-implemented system, comprising:
one or more computers; and
one or more computer memory devices interoperably coupled with the one or more computers and
having tangible, non-transitory, machine-readable media storing one or more instructions that, when executed by the one or more computers, perform one or more operations comprising:
obtaining a plurality of strings;
determining a plurality of tokens of at least one string of the plurality of strings; and
determining at least one common expression of the plurality of strings based on the plurality of tokens of the at least one string of the plurality of strings.

11. The computer-implemented system of claim 10, wherein the determining the plurality of tokens of at least one string of the plurality of strings comprises: for each string of the plurality of strings, determining a plurality of tokens of the string.

12. The computer-implemented system of claim 10 or 11, wherein at least one token of the plurality of tokens is associated with a positional parameter, and wherein the determining at least one common expression comprising:
comparing tokens that are associated with the positional parameter; and
determining a string element of the at least one common expression based on the comparing, wherein the string element corresponds to the positional parameter.

13. The computer-implemented system of claim 12, wherein the string element comprises a token associated with the positional parameter or a wild character, or
wherein at least two string elements are determined for a same positional parameter, and the at least one common expression comprises a first common expression that includes a first string element of the at least two string elements, and a second common expression that includes a second string element of the at least two string elements.

14. The computer-implemented system of claim 12, wherein the string element is determined based on frequencies of tokens associated with the positional parameter and a threshold, and wherein, optionally, at least two positional parameters are associated with different thresholds.

15. The computer-implemented system of any one of claims 10 to 14, the one or more operations further comprising:
performing a clustering operation on a set of strings; and wherein the plurality of strings belong to a same cluster based on the clustering operation.
